# EUROPEAN PATENT APPLICATION

(11) **EP 2 395 433 A1**
(43) Date of publication of application: **14.12.2011**
(21) Application number: 10738568.4
(22) Date of filing: 04.02.2010
(51) Int. Cl.: G06F 12/00, G06F 3/048

(54) **FOLDER MANAGEMENT DEVICE, FOLDER MANAGEMENT METHOD, AND FOLDER MANAGEMENT PROGRAM**

(30) Priority: 04.02.2009 JP 2009023569
(71) Applicant: 1st Holdings, Inc., Tokyo 150-0044 (JP); Four-Clue Inc., Tokyo 150-0036 (JP)
(72) Inventor: TANAKA, Jun, Tokyo 1500036 (JP)
(74) Representative: Vossius & Partner
(86) International application number: PCT/JP2010/051554
(87) International publication number: WO 2010/090237

(57) **Abstract**

When an icon associated with a folder one level lower is displayed within a window, files and folders included in the folder one level lower can be shown to a user in an easy-to-understand manner at a glance by previewing icons displayed in relation to files and folders two levels lower on the icon associated with the folder one level lower according to layout information belonging to the folder one level lower, and the files and folders two levels lower included in the folder one level lower can be previously confirmed by the preview even if the user actually performs no operation for specifying the folder one level lower.

## Description

### TECHNICAL FIELD

The present invention relates to a folder management device, a folder management method and a folder management program, and more particularly to a technique of a GUI to be used for giving access to a file system for managing a file or a folder in a hierarchical structure.

### BACKGROUND ART

As a mechanism for managing data recorded in a storage device of a computer, conventionally, there is a file system. In the file system, a management method for creating a file or a folder and carrying out a movement or a deletion is defined for the storage device. The folder is a directory having a hierarchical structure (a tree structure) and is used for arranging and managing the file of the storage device. The file system is usually provided as one of functions possessed by an OS (operating system).

File management software using a GUI (Graphical User Interface) is utilized for giving access to the file system. The file management software of this type is often referred to as an explorer or a filer. Much file management software has a mechanism for displaying a folder tree on a left side of a screen of a display device, and furthermore, displaying, as an icon, a file or folder included in a single folder on a right side of the screen.

Conventionally, a mechanism for managing a file or a folder by causing a user to utilize file management software is variously devised (for instance, see Patent Documents 1 to 4). The invention described in the Patent Document 1 provides an interface capable of creating a desirable number of folders in a desirable size by dragging a selected object to a desirable position. In other words, in the Patent Document 1, a place folder is created when the selected object is dragged into a grid. At this time, a set of parameters describing a layout of the folder icon (for instance, a size and a position of the folder icon in the grid) is stored in a database.

The invention described in the Patent Document 2 provides a system for sharing a file between a plurality of members by using a group icon. More specifically, in the Patent Document 2, a group icon is caused to stay on a desktop of a computer possessed by each member. When a person in the group changes an icon over his (her) desktop, the content of the change is also reflected over desktops of the other members belonging to the group.

The inventions described in the Patent Documents 3 and 4 provide a mechanism for changing a file other than an image into a thumbnail and displaying the thumbnail. In the Patent Document 3, file icons displayed corresponding to various files are dragged and dropped into desirable positions in a shared window to expand information in the file (for instance, a text or an image) into the shared window. On the other hand, in the Patent Document 4, a reduced image on a desirable page in a document is displayed as a thumbnail.

Patent Document 1 : Japanese Unexamined Patent Application Publication No. 2007-521564
Patent Document 2 : Japanese Unexamined Patent Application Publication No. 2004-021995
Patent Document 3 : Japanese Unexamined Patent Application Publication No. 2005-209212
Patent Document 4 : Japanese Unexamined Patent Application Publication No. 2004-318915

### DISCLOSURE OF THE INVENTION

As described in the Patent Documents 1 to 4, conventionally, there are provided mechanisms for creating a folder icon having a desirable size in a desirable position, sharing the file between a plurality of members by using a common group icon, and changing a file other than an image into a thumbnail and displaying the thumbnail. However, there is a problem in that a great deal of time and labor is required to search for a desirable file or folder, resulting in a poor usability even if these mechanisms are used.

In other words, in the prior art including the Patent Documents 1 to 4, which file or folder is included in a lower layer of a folder is unknown until the folder is opened. For this reason, in the case in which a memory of a user is ambiguous and any part of the hierarchical structure in which a desirable file or folder is present is unknown, for instance, it is necessary for the user to temporarily open any folder in an upper layer to display a file icon or a folder icon in the lower layer, thereby ascertaining whether a desirable file or folder is present or not. If the desirable file or folder is not present in the opened folder, it is necessary to once return to an upper hierarchy, thereby opening another folder to ascertain whether the desirable file or folder is present or not again.

As the case may be, the file icon or the folder icon is sequentially displayed to deeply follow a path from an uppermost layer to a lowermost layer. If the desirable file or folder is not found yet, it is necessary to reversely follow the path followed some time ago, thereby returning to the upper layer and opening another folder to carry out a reconfirmation. Conventionally, it is necessary to thus search for the desirable file or folder on trial. For this reason, there is a problem in that an operation to be carried out by the user is complicated because the directory of the hierarchical structure is to be followed to find the desirable file or folder.

Referring to the prior art, also in the case in which the user grasps a place in which the desirable file or folder is present, it is necessary to carry out a mouse clicking operation or the like many times, thereby following the directory of the folder sequentially when the desirable file or folder is present in a deep layer which is close to the lowermost layer of the hierarchical structure. For this reason, there is also a problem in that a great deal of time and labor is required for reaching the desirable file or folder, resulting in a poor usability.

In order to solve the problems, it is an object of the invention to relieve time and labor of a user until a desirable one of folders or files which are managed in a hierarchical structure through a file system of an OS is found therefrom and to enhance a usability of the user.

In order to achieve the object, the invention provides a folder management device for changing a file and a folder to be managed in a hierarchical structure into icons and displaying the icons in a window, wherein layout information representing a position and a size of the icon in the window is generated and recorded for each folder and the icon is thus displayed in a designated size at a designated position in the window. When an icon related to a folder in a lower part disposed by a single hierarchy is to be displayed in the window, moreover, icons to be displayed in relation to a file and a folder in a lower part disposed by two hierarchies are previewed and displayed on the icon related to the folder in the lower part disposed by the single hierarchy based on layout information related to the folder in the lower part disposed by the single hierarchy.

In another mode of the invention, an operation history related to a folder designating operation is recorded, and a shortcut moving icon for a folder designated subsequently to a designation of a folder in a lower part disposed by a single hierarchy is displayed based on the operation history when an icon related to the folder in the lower part disposed by the single hierarchy is to be displayed in a window.

According to the invention having the structure described above, when a folder in a certain hierarchy is designated to display an icon related to a folder in a lower part disposed by a single hierarchy which is included in the folder, an icon in a lower part disposed by two hierarchies which is to be displayed in the case of the designation of the folder in the lower part disposed by the single hierarchy is previewed and displayed on the icon of the folder in the lower part disposed by the single hierarchy in accordance with a layout based on layout information in the lower part disposed by the two hierarchies. In other words, an icon layout in the lower part disposed by the two hierarchies is previewed onto the folder icon in the lower part disposed by the single hierarchy. Consequently, a user can be caused to see, for easy understanding, a file or a folder which is included in a folder.

For this reason, even if an operation for designating a folder in a lower part disposed by a single hierarchy is not actually carried out, the user can previously confirm, through a preview display, a file or a folder in a lower part disposed by two hierarchies which is included in the folder. As a result, it is possible to relieve time and labor of the user before finding a desirable one of the folders or files managed in the hierarchical structure. Thus, it is possible to enhance a usability of the user.

According to a further mode of the invention, when a folder in a certain hierarchy is designated to display an icon related to a folder in a lower part disposed by a single hierarchy which is included in the folder, a shortcut moving icon for a folder designated subsequently to a designation of the folder in the lower part disposed by the single hierarchy is displayed based on a past operation history. Since the folder indicated by the shortcut moving icon is a folder which was actually designated by the user, there is a high possibility that a desirable file might be obtained.

Also in the case in which a desirable file or folder is present in a deep layer of the hierarchical structure, therefore, it is possible to efficiently reach a desirable file or folder by operating the shortcut moving icon. Consequently, it is possible to relieve time and labor of the user before finding a desirable folder or file. Thus, it is possible to enhance the usability of the user.

### BRIEF DESCRIPTION OF THE DRAWINGS

Fig. 1 is a block diagram showing an example of a functional structure to be implemented in accordance with an application program provided in a folder management device according to a first embodiment,
Fig. 2 is a block diagram showing an example of a hardware structure of a computer including the folder management device according to the first embodiment,
Fig. 3 is a table showing an example of a structure of a layout file according to the embodiment,
Fig. 4 is a diagram showing an example of a hierarchical structure in which the layout file is recorded according to the embodiment,
Fig. 5 is a view showing an example of a screen to be displayed in a window of a display portion under control of a display control portion according to the first embodiment,
Fig. 6 is a view showing an example of the screen to be displayed in the window of the display portion under the control of the display control portion according to the first embodiment,
Fig. 7 is a flowchart showing an example of an action of the folder management device according to the first embodiment,
Fig. 8 is a flowchart showing an example of the action of the folder management device according to the first embodiment,
Fig. 9 is a block diagram showing an example of a functional structure to be implemented in accordance with an application program provided in a folder management device according to a second embodiment,
Fig. 10 is a block diagram showing an example of a hardware structure of a computer including the folder management device according to the second embodiment, and
Fig. 11 is a diagram showing an example of a screen to be displayed in a window of a display portion under control of a display control portion according to the second embodiment.

### BEST MODE FOR CARRYING OUT THE INVENTION

### (First Embodiment)

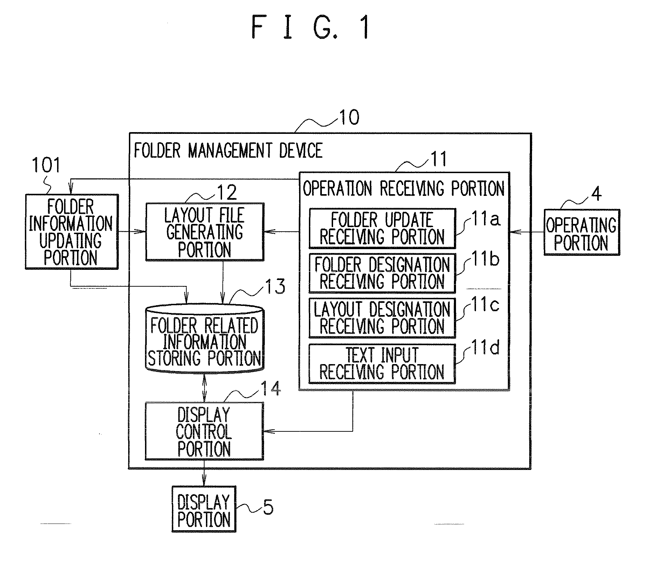

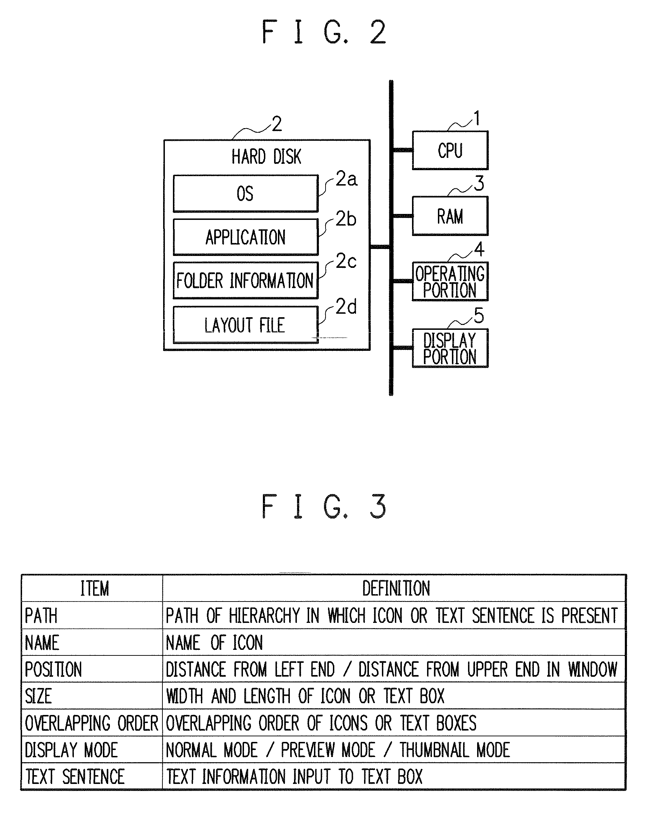

An embodiment according to the invention will be described below with reference to the drawings. Fig. 1 is a block diagram showing an example of a functional structure to be implemented in accordance with an application program provided in a folder management device 10 according to a first embodiment. Fig. 2 is a block diagram showing an example of a hardware structure of a computer including the folder management device 10 according to the first embodiment.

As shown in Fig. 2, the computer including the folder management device 10 according to the first embodiment has a CPU 1, a hard disk 2, an RAM 3, an operating portion 4 and a display portion 5. The hard disk 2 stores an operating system (OS) 2a and an application program 2b. The application program 2b is a folder management program for implementing various functions of the folder management device 10 shown in Fig. 1.

Moreover, the hard disk 2 also stores folder information 2c related to a folder or a file which is managed in a hierarchical structure through the operating system 2a, and a layout file 2d indicative of a display layout related to an icon of the folder or the file.

The CPU 1 executes various processings which will be described below while using the RAM 3 as a work memory in accordance with the application program 2b stored in the hard disk 2. The operating portion 4 serves to cause a user to carry out an operation related to various designations and an information input in the execution of the application program 2b, and is constituted by an input device such as a mouse or a keyboard. The display portion 5 serves to display a result of the execution of the application program 2b and is constituted by an output device such as a liquid crystal display device.

Next, the functional structure of the folder management device 10 to be implemented in accordance with the application program 2b will be described with reference to Fig. 1. As shown in Fig. 1, the folder management device 10 according to the embodiment includes, as the functional structure, an operation receiving portion 11, a layout file generating portion 12, a folder related information storing portion 13, and a display control portion 14. A folder information updating portion 101 is a functional structure to be implemented by the operating system 2a. The operation receiving portion 11 includes a folder update receiving portion 11a, a folder designation receiving portion 11b, a layout designation receiving portion 11c and a text input receiving portion 11d.

The folder update receiving portion 11a receives an updating operation related to a creation, a deletion and a movement for a folder or a file which is to be carried out by a user through the operating portion 4. The folder update receiving portion 11a also receives, as an updating operation, an operation related to a change in a name of the folder or the file. In the case in which the folder update receiving portion 11a receives the updating operation for the folder or the file, the folder information updating portion 101 updates the folder information 2c stored in the folder related information storing portion 13 (the hard disk 2 in Fig. 2) depending on a content of the updating operation.

For instance, in the case in which the folder update receiving portion 11a receives an operation for newly creating a folder, the folder information updating portion 101 updates the folder information 2c to newly create the folder. In the case in which the folder update receiving portion 11a receives an operation for moving the folder, moreover, the folder information updating portion 101 updates the folder information 2c to move the folder. The movement of the folder does not imply a movement over a display layout for a folder icon but a movement between hierarchies of the folder itself.

The folder designation receiving portion 11b receives an operation for designating any of the folders in the hierarchical structure (that is, any of the folders stored as the folder information 2c in the folder related information storing portion 13). More specifically, the folder designation receiving portion 11b receives an operation for designating a folder icon displayed on the display portion 5 through the operating portion 4 by a user (a double clicking operation over the folder icon or an operation for selecting a menu item of "open" from a pop-up menu to be displayed by carrying out a right clicking operation over the folder icon).

When any of the folders is designated by the folder designation receiving portion 11b through the operation of the operating portion 4, the display control portion 14 displays, in a window of the display portion 5, icons related to a file and a folder in a lower part disposed by a single hierarchy which are included in the designated folder based on the folder information 2c and the layout file 2d which are stored in the folder related information storing portion 13. How to display the icon based on the folder information 2c and the layout file 2d will be described below in detail.

The layout designation receiving portion 11c receives an operation for designating a position and a size of the icon displayed in the window. More specifically, the layout designation receiving portion 11c receives an operation for moving the icon in the window through drag and drop as the operation for designating the position of the icon. Moreover, the layout designation receiving portion 11c receives an operation for holding a periphery of the icon through the drag to enlarge or reduce the icon as the operation for designating the size of the icon.

The text input receiving portion 11d receives an input of a text sentence to a text box. More specifically, the text input receiving portion 11d receives an operation for inputting a desirable comment or the like through a keyboard by a user. The input of the text sentence is carried out in the following manner, for instance. In other words, the user operates a mouse to set the text box for inputting the text sentence into a desirable position in the window. Then, the keyboard is operated to input the text sentence in a desirable font size into the text box.

The layout designation receiving portion 11c also receives an operation for designating a position and a size of the text box in the window which is set by the text input receiving portion 11d through the operation of the operating portion 4. More specifically, the layout designation receiving portion 11c receives an operation for moving the text box in the window through drag and drop as the operation for designating the position of the text box. Moreover, the layout designation receiving portion 11c receives an operation for holding the periphery of the text box through the drag to enlarge or reduce the text box as the operation for designating the size of the text box. The layout designation receiving portion 11c may receive an operation for enlarging or reducing a font size of a text as the operation for designating the size of the text box. In this case, the size of the text box is set to be changed interlockingly with a variation in the font size of the text if any.

The layout file generating portion 12 generates the layout file 2d representing a display layout of an icon or a text sentence in the window and records the layout file 2d in the folder related information storing portion 13. Fig. 3 is a table showing an example of a structure of the layout file 2d. As shown in Fig. 3, the layout file 2d includes, as information, a path of a hierarchy in which an icon or a text sentence is present, a name of an icon, a position and a size of an icon or a text box, overlapping order, a display mode and a text sentence.

In the case in which an icon is a folder icon, the name of the icon indicates a folder name. In the case in which the icon is a file icon, the name of the icon indicates a file name. The position of an icon or a text box is specified by a distance from a left end and a distance from an upper end in the window, for instance. Moreover, the size of the icon or the text box is specified by a width and a length of the icon or the text box, for instance. The overlapping order indicates information representing overlapping order in which icons or text boxes overlap with each other if any. The display mode indicates information representing any mode in which the icon is to be displayed. The text sentence indicates text information input to the text box.

When a folder or a file is created through the folder information updating portion 101 by the operation of the operating portion 4, the layout file generating portion 12 generates layout information representing the position and size of the icon related to the folder or file. Then, the layout information thus generated is recorded as the layout file 2d in the folder related information storing portion 13 together with a path and a name of the folder or the file.

Referring to a position and a size of an icon created newly, the layout file generating portion 12 generates layout information in order to make a layout into a predetermined position and size in the window. For instance, the layout file generating portion 12 generates layout information in such a manner that the newly created icon is disposed in a fixed size in a left and lower part of the window. In the case in which a plurality of new icons is provided, the layout information is generated in such a manner that the icons are disposed in a fixed size in order from the left and lower part of the window in a rightward direction.

When a text sentence is input through the text input receiving portion 11d by the operation of the operating portion 4, moreover, the layout file generating portion 12 generates layout information representing a position and a size of a text box for inputting the text sentence. Then, the layout information about the text box which is generated is recorded as the layout file 2d in the folder related information storing portion 13 together with the path of the text sentence and the text information.

Furthermore, the layout file generating portion 12 records the overlapping order information representing the overlapping order of the icons or text boxes in an including condition in the layout file 2d in addition to the layout information representing the position and size of the icon or the text box. As described above, in the embodiment, it is possible to move the icon or the text box to a desirable position in the window through the operation of the operating portion 4 and to change the icon or the text box to have a desirable size. For this reason, the icons or the text boxes partially overlap with each other in some cases. In those cases, it is necessary to specify which icon or text box is to be displayed on a front surface (to be displayed on a back face).

Therefore, the layout file generating portion 12 decides whether the icons or the text boxes overlap with each other or not based on the generated layout information. If they overlap with each other, overlapping order information representing either of which is a front surface or a back face is generated and is recorded in the folder related information storing portion 13 in an including condition in the layout file 2d. For instance, when a certain icon is moved onto another icon and they are caused to overlap with each other, the layout file generating portion 12 generates the overlapping order information to display the moved icon on the front surface.

When the position and the size of the icon or the text box are designated through the layout designation receiving portion 11c by the operation of the operating portion 4, moreover, the layout file generating portion 12 updates the layout information of the layout file 2d into a content representing the position and the size of the icon or the text box which are designated. As the case may be, the overlapping order information is also updated.

Furthermore, the layout file generating portion 12 records display mode information representing a display mode of the icon in the folder related information storing portion 13 in an including condition in the layout file 2d in addition to the layout information representing the position and the size of the icon or the text box. The icon to be displayed has two types having a folder icon and a file icon. In the embodiment, the display mode information is generated to display the folder icon in a preview mode and to display the file icon in a thumbnail mode or a normal mode. The preview mode, the thumbnail mode and the normal mode will be described below in detail.

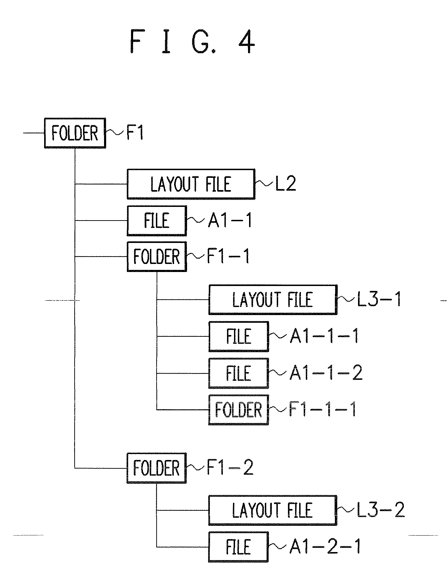

In the embodiment, the layout file 2d described above is generated for each hierarchy of a hierarchical structure. Fig. 4 is a diagram showing an example of the hierarchical structure in which the layout file 2d is recorded. In the example shown in Fig. 4, a folder F1 is disposed under a route directory (a first hierarchy), and a file A1-1 and two folders F1-1 and F1-2 are present in a lower part of the folder F1 disposed by a single hierarchy (a second hierarchy). In other words, the file A1-1 and the folders F1-1 and F1-2 in the second hierarchy are included in the folder F1 of the first hierarchy.

Furthermore, a folder F1-1-1. and two files A1-1-1 and A1-1-2 are disposed in a lower part by a single hierarchy from the folder F1-1 in the second hierarchy (a third hierarchy). In other words, the folder F1-1-1 and the files A1-1-1 and A1-1-2 in the third hierarchy are included in the folder F1-1 of the second hierarchy. Moreover, a file A1-2-1 is disposed in a lower part in the second hierarchy by a single hierarchy from the folder F1-2 (the third hierarchy). In other words, the file A1-2-1 in the third hierarchy is included in the folder F1-2 of the second hierarchy.

A layout file L2 in the second hierarchy indicates a display layout of icons related to the file A1-1 and the folders F1-1 and F1-2 which belong to the second hierarchy. In other words, when the file A1-1 and the folders F1-1 and F1-2 in the second hierarchy which are included in the folder F1 of the first hierarchy are created in a state in which the folder F1 is designated through the folder designation receiving portion 11b, the layout file generating portion 12 generates the layout file 2d related to the file A1-1 and the folders F1-1 and F1-2 and records the layout file 2d as a layout file (a layout file belonging to the designated folder F1) L2 in the second hierarchy.

When the folder F1 in the first hierarchy is designated through the folder designation receiving portion 11b and a change in a position or a size of an icon is designated through the layout designation receiving portion 11c by the operation of the operating portion 4 in a state in which the icons of the file A1-1 and the folders F1-1 and F1-2 in the second hierarchy that are included in the folder F1 are displayed on the window, moreover, the layout file generating portion 12 updates layout information of the layout file L2 into a content representing the position and the size of the icon thus changed.

Furthermore, a layout file L3-1 in the third hierarchy indicates a display layout of icons related to the folder F1-1-1 and the files A1-1-1 and A1-1-2 in the third hierarchy included in the folder F1-1 of the second hierarchy. For instance, it is assumed that the folder F1-1 in the second hierarchy is designated through the folder designation receiving portion 11b and icons of the folder F1-1-1 and the files A1-1-1 and A1-1-2 in the third hierarchy included therein are displayed on the window. When a change in a position or size of the icon is designated through the layout designation receiving portion 11c by the operation of the operating portion 4 in this condition, the layout file generating portion 12 updates the layout file (a layout file belonging to the designated folder F1-1) L3-1 in the third hierarchy related to the folder F1-1-1 and the files A1-1-1 and A1-1-2 into a content representing the position and the size of the icon thus changed.

Moreover, a layout file L3-2 in the third hierarchy indicates a display layout of icons related to the file A1-2-1 in the third hierarchy included in the folder F1-2 of the second hierarchy. For instance, it is assumed that the folder F1-2 in the second hierarchy is designated through the folder designation receiving portion 11b and the icon of the file A1-2-1 in the third hierarchy included therein is displayed on the window. When a change in a position or size of the icon is designated through the layout designation receiving portion 11c by the operation of the operating portion 4 in this condition, the layout file generating portion 12 updates the layout file (a layout file belonging to the designated folder F1-2) L-3 in the third hierarchy related to the file A1-2-1 into a content representing the position and the size of the icon thus changed.

The display control portion 14 displays an icon or a text sentence in the window of the display portion 5 based on the layout file 2d recorded in the folder related information storing portion 13 by the layout file generating portion 12. At this time, the display control portion 14 decides whether the icons or the text boxes partially overlap with each other or not based on the layout information of the layout file 2d. When they overlap with each other, the icons or the text boxes are displayed in an overlap based on overlapping order information of the layout file 2d.

When the icon related to a folder in a lower part disposed by a single hierarchy from a designated folder is to be displayed in the window, the display control portion 14 refers to the layout file 2d belonging to the folder in the lower part disposed by the shingle hierarchy, thereby previewing and displaying an icon to be displayed in relation to a file and a folder disposed in a lower part by two hierarchies onto the icon related to the folder in the lower part disposed by the single hierarchy in accordance with description of the display mode information included in the layout file 2d. This represents an icon display in the preview mode.

For instance, when the folder F1 in the first hierarchy shown in Fig. 4 is to be designated to display, on the window, the icons related to the file A1-1 and the folders F1-1 and F1-2 in the second hierarchy included in the folder F1, the display control portion 14 refers to the layout file L3-1 in the third hierarchy belonging to the folder F1-1 to preview and display icons displayed in relation to the folder F1-1-1 and the files A1-1-1 and A1-1-2 in the third hierarchy to be a lower part disposed by two hierarchies from the designated folder F1 on the icon related to the folder F1-1 in the second hierarchy. Similarly, the display control portion 14 refers to the layout file L3-2 in the third hierarchy belonging to the folder F1-2 in the second hierarchy to preview and display an icon displayed in relation to the file A1-2-1 in the third hierarchy to be a lower part disposed by two hierarchies from the designated folder F1 on the icon related to the folder F1-2 in the second hierarchy.

When an icon related to a file in a lower part disposed by a single hierarchy from a designated folder is to be displayed in the window, moreover, the display control portion 14 changes, into a thumbnail, a content of the file in the lower part disposed by the single hierarchy from the designated folder and displays the thumbnail in accordance with the description of the display mode information included in the layout file 2d. This represents an icon display in the thumbnail mode. For instance, in the case in which an icon of an image file is displayed, the display control portion 14 generates a thumbnail image of the image file and displays the generated thumbnail image as a file icon. In other words, the icon is displayed as a thumbnail of the image file.

In the case in which an icon for a text file is displayed, furthermore, the display control portion 14 generates information in the text file (for instance, a part of a text sentence) as a thumbnail image and displays the generated thumbnail image as a file icon. A reduced image on a predetermined page in a document may be generated as a thumbnail image. In the case in which an icon of an HTML f ile is displayed, moreover, the display control portion 14 actually generates a web page from the HTML file and displays the generated web page as a file icon. For this purpose, a computer according to the embodiment is connected to internet and access is given to a URL designated by the HTML file to download necessary information, thereby generating a web page.

In the case of a file in which a thumbnail image cannot be generated, for instance, a voice file, the display control portion 14 displays an icon in the normal mode in accordance with the description of the display mode information included in the layout file 2d. The normal mode serves to display an icon taking a predetermined and specified shape without bringing a layout of the icon in the lower part disposed by a single hierarchy into a preview state or changing the content of the file into a thumbnail.

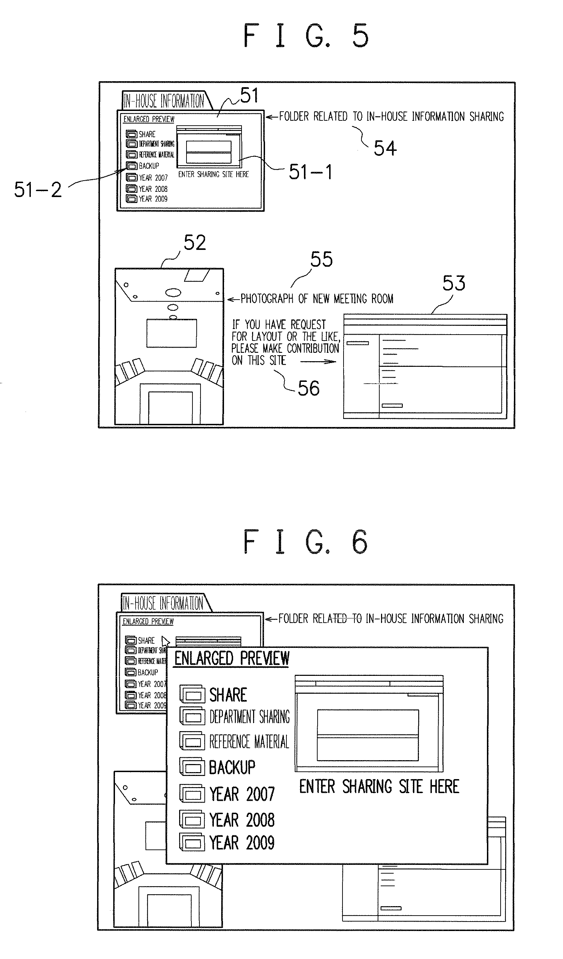

Fig. 5 is a view showing an example of a screen to be displayed in the window of the display portion 5 under control of the display control portion 14. Fig. 5 shows the window over which an icon of a file or folder that is included in a designated folder in a certain hierarchy is displayed when the folder is designated.

In Fig. 5, an icon 51 is an icon related to a folder in a lower part disposed by a single hierarchy which is included in the designated folder. A position and a size of the folder icon 51 are designated through the layout designation receiving portion 11c by the operation of the operating portion 4. An icon related to a folder or a file in a lower part disposed by a further hierarchy (a lower part disposed by two hierarchies from the designated folder) is previewed and displayed on the folder icon 51. In other words, a layout of an icon to be displayed on the window in a transition to a lower part disposed by a single hierarchy through the designation of the folder icon 51 is exactly previewed and displayed on the folder icon 51.

An icon 51-1 previewed and displayed on the folder icon 51 is a file icon and a thumbnail, image is displayed as an icon. On the other hand, an icon 51-2 is a folder icon. A folder corresponding to the folder icon 51-2 further includes a file and a folder in a lower part disposed by a further hierarchy (a lower part disposed by three hierarchies from a designated folder). However, the folder icon 51-2 itself previewed and displayed is not displayed in the preview mode but is displayed in the normal mode, and furthermore, a folder name is displayed. Since a size of the folder icon 51-2 previewed and displayed is small, an icon in a lower part disposed by three hierarchies is not clear even if it is previewed and displayed.

When a mouse cursor is adjusted to the folder icon 51 through the operation of the operating portion 4, the display control portion 14 enlarges, previews and displays the folder icon 51 as shown in Fig. 6. Consequently, a user can easily see the icons 51-1 and 51-2 in the lower part disposed by a single hierarchy which is previewed and displayed on the folder icon 51. In particular, also in the case in which the size of the folder icon 51 is set to be small and the icons 51-1 and 51-2 previewed and displayed are recognized with difficulty in that condition, it is possible to easily recognize the icons 51-1 and 51-2 previewed and displayed by enlarging and displaying the folder icon 51.

Both of other icons 52 and 53 shown in Fig. 5 are icons related to a file in a lower part disposed by a single hierarchy which is included in the designated folder. The icon 52 is an icon of an image file and a content of the image file is changed into a thumbnail and is thus displayed. On the other hand, the icon 53 is an icon of an HTML file and a content of a web page is exactly displayed as an icon. Positions and sizes of these file icons 52 and 53 are also designated through the layout designation receiving portion 11c by the operation of the operating portion 4.

Text sentences 54, 55 and 56 are input as comments for the icons 51, 52 and 53, respectively. Positions and sizes of the text sentences 54, 55 and 56 are also designated through the layout designation receiving portion 11c by the operation of the operating portion 4.

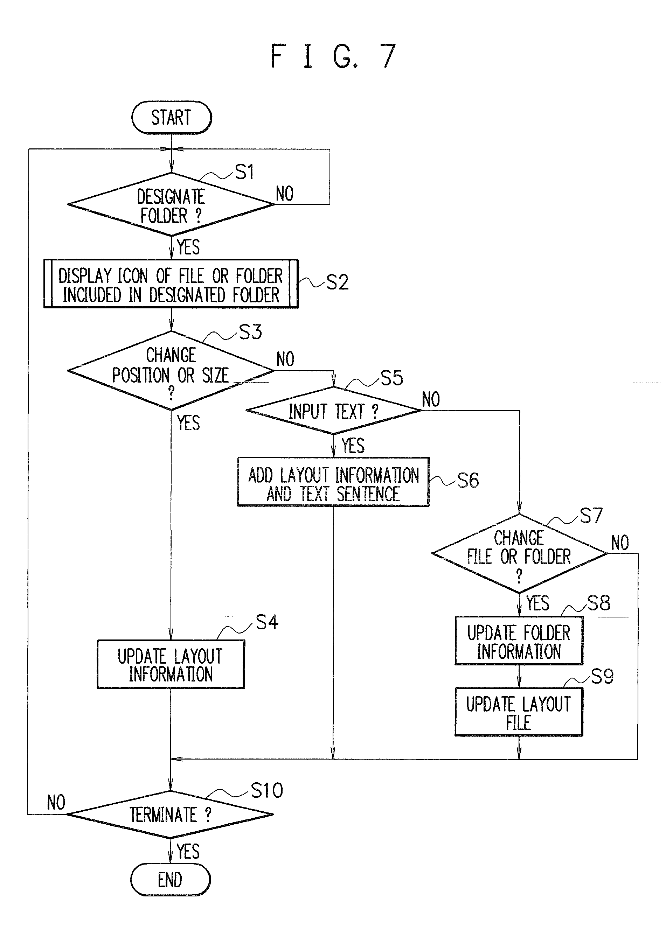

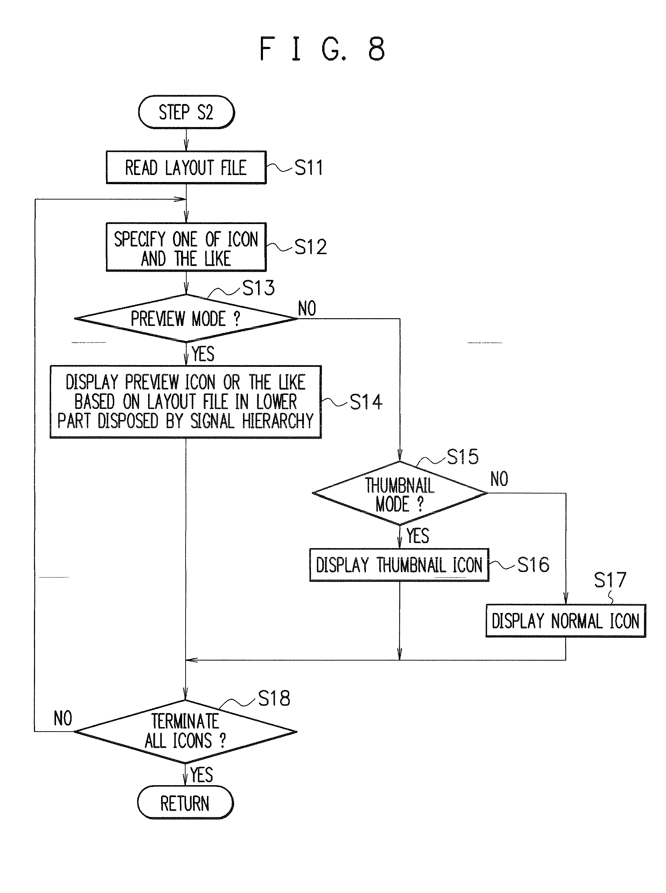

Next, description will be given to an action of the folder management device 10 according to the first embodiment which has the structure mentioned above. Figs. 7 and 8 are flowcharts showing an example of the action of the folder management device 10 (the application program 2b). In Fig. 7, the folder designation receiving portion 11b decides whether an operation for designating any of the folders in the hierarchical structure through the operation of the operating portion 4 is received or not (Step S1). If the folder is not designated, the processing of the Step S1 is repeated.

On the other hand, if the folder designation receiving portion 11b decides that the folder is designated, the display control portion 14 displays an icon in the window of the display portion 5 based on any of the layout files 2d in the respective hierarchies stored in the folder related information storing portion 13 which belongs to the folder designated at the Step S1 (Step S2). The icon to be displayed at this time is an icon of a file or a folder in a lower part disposed by a single hierarchy which is included in the designated folder. The display control portion 14 displays the file icon in the thumbnail mode and displays the folder icon in the preview mode in accordance with the display mode information of the layout file 2d. If text information is included in the layout file 2d, moreover, the display control portion 14 also displays a text sentence. The processing of the Step S2 will be described below in detail with reference to Fig. 8.

Next, the layout designation receiving portion 11c decides whether an operation for designating (changing) a position and a size of the icon displayed in the window at the Step S2 or a text box is received or not (Step S3). If the layout designation receiving portion 11c decides that the operation for changing the position or the size is carried out, the layout file generating portion 12 updates the layout information of the layout file 2d into a content representing the position and the size which are designated by the operation (Step S4). If a way for an overlap of the icon or the text box is varied with a movement of the icon or the text box, the layout file generating portion 12 also updates overlapping order information of the layout file 2d.

On the other hand, if the layout designation receiving portion 11c decides that the operation for changing the position or the size is not carried out, the text input receiving portion 11d decides whether the operation for inputting a text sentence is received or not (Step S5). If the text input receiving portion 11d decides that the operation for inputting a text sentence is carried out, the layout file generating portion 12 adds, to the layout file 2d, text information representing the input text sentence and layout information of a text box for putting the text sentence therein (Step S6).

If the text input receiving portion 11d decides that the operation for inputting a text sentence is not carried out, the folder update receiving portion 11a decides whether or not an operation for updating a folder or a file is received (Step S7). The updating operation includes an operation for creating a new file or folder in the folder designated at the Step S1, an operation for deleting the file or folder having the icon displayed at the Step S2, an operation for moving the file or folder having the icon displayed at the Step S2 to another folder, and the like.

If the folder update receiving portion 11a decides that the operation for updating a folder or a file is carried out, the folder information updating portion 101 updates the folder information 2c stored in the folder related information storing portion 13 (Step S8). The processing is not executed in accordance with the application program 2b of the folder management device 10 but a function of the operating system 2a. Then, the layout file generating portion 12 updates the layout file 2d corresponding to the updated content of the file or folder (Step S9).

After the processing of the Step S4, the Step S6 or the Step S9 is ended, the processing proceeds to Step S10. If the folder update receiving portion 11a decides that the operation for updating the folder or the file is not carried out at the Step S7, similarly, the processing proceeds to the Step S10. At the Step S10, the operation receiving portion 11 decides whether an operation for ending the action of the folder management device 10 (the application program 2b) is received or not. The operation for ending the action indicates an operation for closing a window, for instance. If the operation for ending the action is received, the processing of the flowchart is ended. On the other hand, if the operation for ending the action is not received, the processing returns to the Step S1.

Next, the processing of the Step S2 will be described below in detail with reference to Fig. 8. In Fig. 8, the display control portion 14 reads, from the folder related information storing portion 13, the layout file 2d belonging to the folder designated at the Step S1 in Fig. 7 (the layout file 2d in a lower part disposed by a single hierarchy from the designated folder) (Step S11). Then, one of at least one icon or text sentence described in the layout file 2d is specified (Step S12). The display control portion 14 decides whether a display mode of the specified icon or the like is a preview mode or not (Step S13).

If the display mode of the specified icon or the like is the preview mode, the icon is a folder icon. In this case, the display control portion 14 refers to the layout file 2d belonging to the folder in which the icon is specified at the Step S12 (the layout file 2d in a lower part disposed by two hierarchies from the folder designated at the step S1 in Fig. 7), thereby previewing and displaying icons displayed in relation to a file and a folder in the lower part disposed by two hierarchies or the like on the folder icon specified at the Step S12 (Step S14).

On the other hand, if the display mode of the icon specified at the Step S12 or the like is not the preview mode, the display control portion 14 decides whether the display mode is a thumbnail mode or not (Step S15). If the display mode is the thumbnail mode, the icon is a file icon which can be displayed in a thumbnail. In this case, the display control portion 14 changes the content of the file into a thumbnail and thus displays an icon (Step S16).

If the display mode of the icon specified at the Step S12 or the like is neither the preview mode nor the thumbnail mode, that is, a normal mode, the display control portion 14 displays, in the normal mode, the icon specified at the Step S12 or the like (Step S17). After the processing of the Step S14, the Step S16 or the Step S17 is ended, the processing proceeds to Step S18. At the Step S18, the display control portion 14 decides whether or not the display processing is ended for all of the icons described in the layout file 2d or the like. If the display processing is not ended for all of the icons or the like, the processing returns to the Step S12 and a next icon or the like is specified. On the other hand, if the display processing is ended for all of the icons or the like, the processing passes through the flowchart and then proceeds to the Step S3 in Fig. 7.

As described above in detail, in the first embodiment, the layout information representing the position and the size of the icon in the window is generated for each folder and is recorded as the layout file 2d. Thus, the icon is displayed in the designated size at the designated position in the window. When the icon related to the folder in a lower part disposed by a single hierarchy in the window is to be displayed, moreover, the icons displayed in relation to the file and the folder in the lower part disposed by two hierarchies are previewed and displayed on the icon related to the folder in the lower part disposed by a single hierarchy based on the layout file 2d belonging to the folder in the lower part disposed by a single hierarchy.

According to the first embodiment thus constituted, if a folder in a certain hierarchy is designated to display an icon related to a folder in a lower part disposed by a single hierarchy which is included in the folder, an icon in a lower part disposed by two hierarchies which is displayed in a transition when the folder in the lower part disposed by a single hierarchy is designated is previewed and displayed on a folder icon in a lower part disposed by a single hierarchy in accordance with a layout based on the layout file 2d in a lower part disposed by two hierarchies. In other words, an icon layout in the lower part disposed by two hierarchies is previewed on the folder icon in the lower part disposed by a single hierarchy.

Consequently, a user can be caused to see, for easy understanding, the file or the folder which is included in the folder. For this reason, the user can previously confirm the file or folder in the lower part disposed by two hierarchies which is included in the folder through a preview display without actually carrying out the operation for designating the folder in the lower part disposed by a single hierarchy. As a result, it is possible to relieve time and labor of the user before finding a desirable one of the folders or files managed in the hierarchical structure. Thus, it is possible to enhance a usability of the user.

In the first embodiment, moreover, when the icon related to the file is to be displayed in the window, the content of the file is changed into a thumbnail and is thus displayed. In addition, also when the icon in the lower part disposed by two hierarchies is to be previewed and displayed on the folder icon in the lower part disposed by a single hierarchy, the content of the file is changed into a thumbnail and is thus previewed and displayed for the file icon. Consequently, a user can be caused to see, for easy understanding, the contents of the files down to the second hierarchy. Therefore, the user can previously recognize the content of the file through a thumbnail image without actually opening and confirming the file. Thus, it is possible to relieve time and labor of the user before finding a desirable one of the files in the hierarchical structure. Consequently, it is possible to enhance the usability of the user.

In the first embodiment, moreover, the layout file 2d is caused to include the overlapping order information and the overlapping display of the mutual icons is thus carried out. In general file management software, the overlap of a certain icon on another icon implies that the icon (accurately, a file or folder to be specified by the icon) is moved to another hierarchy, and the overlapping display cannot be carried out. On the other hand, in the first embodiment, a special file, that is, the layout file 2d is provided for each hierarchy and the overlapping display of the mutual icons is permitted based on the overlapping order information described in the layout file 2d. Consequently, more icons can be displayed or the icons in the same category can be displayed collectively in a limited space of the window.

If the file or folder cannot be moved at all due to the overlap of a certain icon on another icon, an inconvenience is caused in respect of the file operation or the folder operation. Therefore, a condition for distinguishing a movement of an icon to another hierarchy or an overlapping display may be provided to separately carry out the action depending on which condition is pertinent. For instance, in the case in which two icons overlap with each other, a ratio of an area of an overlapping part to that of a non-overlapping part is obtained for each icon. The movement of the icon (the file or the folder) to another hierarchy is carried out if an area ratio calculated for at least one icon is equal to or greater than a predetermined value, and the overlapping display of the icon is carried out if the area ratio is smaller than the predetermined value. Thus, the user can optionally select whether the file or folder specified by the icon is moved to another hierarchy or whether the icon is simply displayed in an overlap depending on the overlapping state of the icon.

In the first embodiment, moreover, the layout file 2d is caused to include the text information therein and the text sentence is displayed in the desirable position in the window. Consequently, it is possible to optionally make and display a comment for the folder icon or the file icon which is displayed in the window. In the general file management software, it is possible to only change the name of the icon optionally. On the other hand, in the first embodiment, it is possible to paste and display an optional comment sentence on an optional position (for instance, a close space to an icon).

Therefore, the user can visually confirm a file or folder in a lower part disposed by a single hierarchy which is previewed and displayed on a folder icon, and furthermore, can confirm the content in the folder based on the content of the comment sentence. Similarly, it is possible to visually confirm the content of the file through the file icon changed into a thumbnail, and furthermore, to confirm the content of the file, various messages or the like based on the content of the comment sentence. Consequently, it is possible to relieve time and labor of the user before finding a desirable one of the folders or files in the hierarchical structure. Thus, it is possible to enhance the usability of the user.

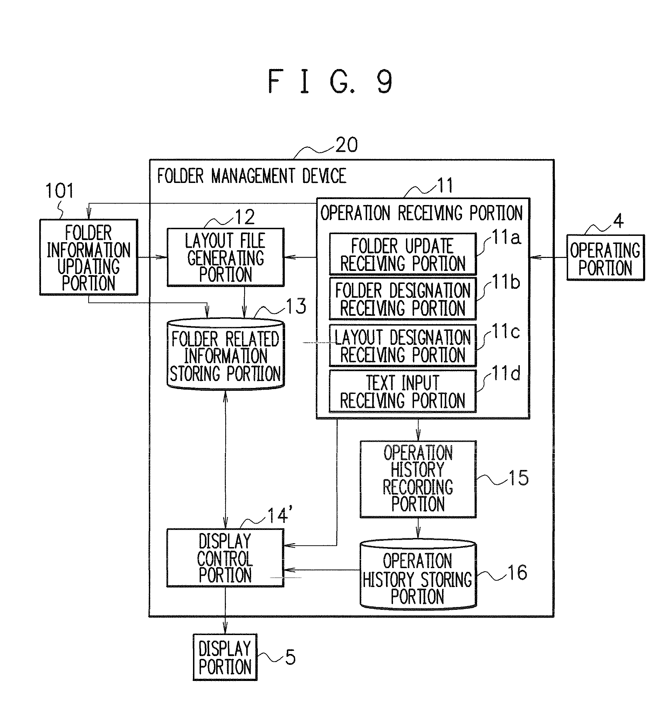

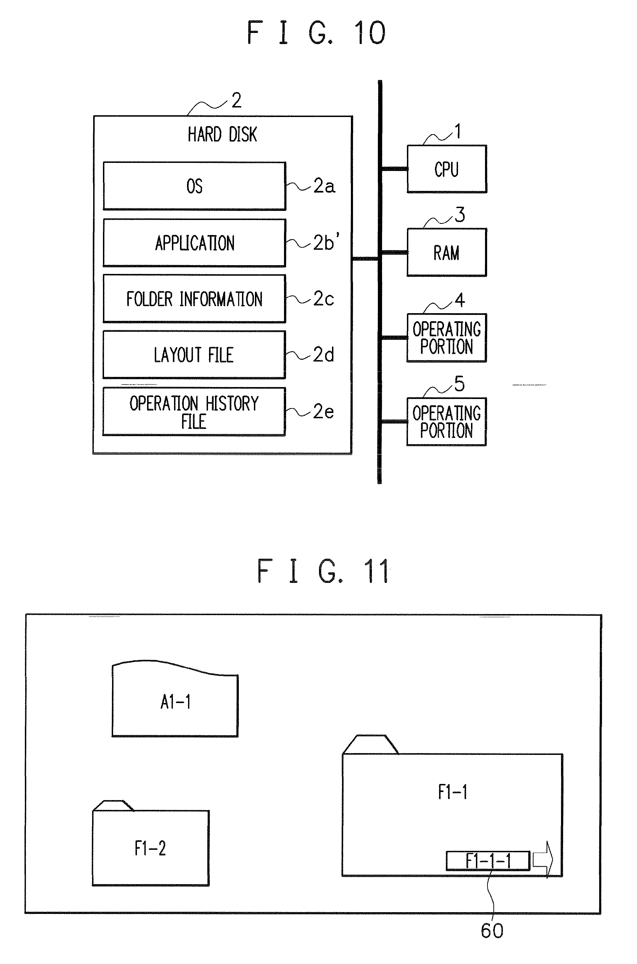

Next, a second embodiment according to the invention will be described with reference to the drawings. Fig. 9 is a block diagram showing an example of a functional structure to be implemented by an application program provided in a folder management device 20 according to the second embodiment. Fig. 10 is a block diagram showing an example of a hardware structure of a computer including the folder management device 20 according to the second embodiment. In Figs. 9 and 10, members having the same reference numerals as those shown in Figs. 1 and 2 have the same functions, and therefore, repetitive description will be omitted.

As shown in Fig. 10, the computer including the folder management device 20 according to the second embodiment has a CPU 1, a hard disk 2, an RAM 3, an operating portion 4 and a display portion 5. The hard disk 2 stores an operation history file 2e indicative of an operation history related to a folder designating operation in addition to the operating system 2a, the folder information 2c and the layout file 2d described in the first embodiment. Moreover, an application program 2b' is stored in place of the application program 2b described in the first embodiment. The application program 2b' is a folder management program for implementing various functions of the folder management device 20 shown in Fig. 9.

As shown in Fig. 9, the folder management device 20 according to the second embodiment includes, as the functional structure, an operation history recording portion 15 and a history information storing portion 16 in addition to the operation receiving portion 11, the layout file generating portion 12 and the folder related information storing portion 13 described in the first embodiment. Moreover, a display control portion 14' is provided in place of the display control portion 14 described in the first embodiment.

The operation history recording portion 15 generates the operation history file 2e describing an operation history related to the folder designating operation which is received by the folder designation receiving portion 11b and records the operation history file 2e in the history information storing portion 16. For instance, in the example of the hierarchical structure shown in Fig. 4, in the case in which a user designates a folder in order of a folder F1, a folder F1-1 and a folder F1-1-1 through an operation of the operating portion 4, the operation history recording portion 15 generates the operation history file 2e including the operation history information of F1 → F1-1 → F1-1-1 and records the operation history file 2e in the history information storing portion 16.

The display control portion 14' also carries out the following processing in addition to the display control processing described in the first embodiment. In other words, when displaying a folder icon (an icon of a folder belonging to a lower part disposed by a single hierarchy of the folder designated by the folder resignation receiving portion 11b) in a window, the display control portion 14' displays a shortcut moving icon for a folder designated subsequently to the designation of the folder in the lower part disposed by the single hierarchy on a folder icon in the lower part disposed by the single hierarchy based on the operation history file 2e recorded in the history information storing portion 16.

Fig. 11 is a diagram simply showing an example of a screen of a window to be displayed when a user designates the folder F1 of a first hierarchy through the operation of the operating portion 4. According to the hierarchical structure shown in Fig. 4, a file A1-1 and folders F1-1 and F1-2 are provided in a lower part disposed by a single hierarchy (a second hierarchy) of the folder F1. In this case, the display control portion 14' lays out and displays icons of the file A1-1 and the folders F1-1 and F1-2 in accordance with a layout file L2 of the second hierarchy as shown in Fig. 11.

According to the operation history file 2e, moreover, it is recorded that the folder F1-1 in the lower part disposed by a single hierarchy was designated subsequently to the designation of the folder F1, and furthermore, the folder F1-1-1 in a lower part disposed by a further hierarchy was designated subsequently to the designation of the folder F1-1. In this case, the display control portion 14' displays a shortcut moving icon 60 for the folder F1-1-1 designated subsequently to the designation of the folder F1-1 in the lower part disposed by a single hierarchy in an overlap with the icon of the folder F1-1 in the lower part disposed by a single hierarchy.

According to the second embodiment thus constituted, also in the case in which a desirable folder to be searched by a user is provided in a deep layer of the hierarchical structure, it is possible to efficiently reach the desirable folder by operating the shortcut moving icon 60. Since the folder indicated by the shortcut moving icon was actually designated by the user, there is a high possibility that a desirable file might be obtained. Consequently, it is possible to relieve time and labor of the user before finding the desirable folder. Thus, it is possible to enhance a usability of the user.

Although the explanation has been given to the example in which the shortcut moving icon for the folder is displayed, it is also possible to display the shortcut moving icon for the file. In this case, the operation history recording portion 15 records, in the history information storing portion 16, the operation history file 2e describing an operation history related to the file designating operation in addition to the folder designating operation received by the folder designation receiving portion 11b.

Although the explanation has been given to the example in which the shortcut moving icon for the folder in the lower part disposed by two hierarchies is displayed, moreover, it is also possible to display a shortcut moving icon for a folder or file in a lower part disposed by at least three hierarchies. For instance, a shortcut moving icon for a finally designated one of the folders or files designated serially is displayed based on the operation history information described in the operation history file 2e. Alternatively, it is also possible to display all of the shortcut moving icons for the folder or file designated in the lower part disposed by at least two hierarchies.

Although the explanation has been given to the example in which the layout file 2d is generated for each hierarchy as shown in Fig. 4 in the first and second embodiments, the invention is not restricted thereto. In other words, if the description is made in such a manner that a layout of an icon or a text sentence can be specified for each folder, it is also possible to generate the single layout file 2d over the whole hierarchy.

Although the explanation has been given to the example in which the history of the designating operation for the folder or icon is recorded in the second embodiment, moreover, it is also possible to record an update history of the layout file 2d in place of the simple history of the designating operation. It is also possible to freely select any state recorded as the update history at any time, thereby displaying an icon or a text sentence in a layout.

Although the explanation has been given to the example in which the shortcut moving icon for the folder having the history of the designating operation recorded therein is displayed in the second embodiment, furthermore, the invention is not restricted thereto. For instance, it is also possible to display the shortcut moving icon for only the folder designated at a predetermined number of frequencies or more in the operation history information stored in the operation history storing portion 16. Consequently, it is possible to prevent many shortcut moving icons from being excessively displayed, and furthermore, to display the shortcut moving icon for a folder having a higher possibility of a desirable file.

Although the explanation has been given to the example in which the folder management device is applied to a computer to be a unit in the first and second embodiments, moreover, the invention is not restricted thereto. For instance, it is also possible to apply the folder management device to a system in which a server device and a plurality of computers to be used by a plurality of users are connected to each other through a communication network. In this case, the server device may include the folder management device and the layout file 2d to be stored in the server device may be shared between the users. In other words, the screen shown in Fig. 5 is displayed on the computer of each of the users based on the layout file 2d to be stored in the server device, for instance. Then, an operation such as the folder designation, the layout designation or the text input is carried out through the computer of each of the users to update the layout file 2d stored in the server device. When the users carry out the operation for the same folder, the layout file 2d is updated in accordance with the newest operation.

In the case in which the layout file 2d to be stored in the server device is shared by the users as described above, moreover, it is also possible to record the update history of the layout file 2d for each user (each computer) and to freely select any state recorded as the update history at any time, thereby carrying out a layout display. Even if the layout file 2d in the server device is updated by the newest operation carried out by other people, consequently, it is possible to freely select any state recorded as the update history by utilizing the history of the update of the layout file 2d which is carried out by oneself, thereby performing the layout display.

In the case in which the layout file 2d stored in the server device is shared by the users as described above, moreover, it is also possible to store the information of the layout file 2d in a cache memory in a computer and to carry out a layout display in accordance with the information in the cache memory. Also in an offline state in which the server device and the computer are not connected to each other, thus, it is possible to change a layout by using the information of the cache memory individually in each computer. In this case, when the server device and the computer are connected to each other (in an online reconnection), it is also possible to transmit the information of the cache memory to the server device, thereby updating the layout file 2d in the server device.

Although the explanation has been given to the example in which the folder icon is displayed in the preview mode and the file icon is displayed in the thumbnail mode or the normal mode in the first and second embodiments, furthermore, the invention is not restricted thereto. For instance, the file icon may be displayed in an executing preview mode. The executing preview mode is a mode for displaying, as an icon, a result obtained by actually executing a file. For instance, a result obtained by executing a document file of word processing software, a spreadsheet file of spreadsheet software, an SQL of database software or the like is displayed on a folder. The result obtained by actually executing the file is displayed on the folder. Therefore, it is possible to directly input or write data over the folder.

In addition, both of the first and second embodiments are only illustrative for implementation to carry out the invention and the technical scope of the invention should not be thereby construed to be restrictive. In other words, the invention can be variously carried out without departing from the spirit or main features thereof.

### INDUSTRIAL APPLICABILITY

The folder management device, the folder management method and the folder management program according to the invention can be utilized for a computer including a file system for managing a file or a folder in a hierarchical structure.

## Claims

1. A folder management device for changing a file and a folder to be managed in a hierarchical structure into icons and displaying, in a window, icons related to a file and a folder in a lower layer included in a designated folder, comprising:
a folder designation receiving portion for receiving an operation for designating any of the folders in the hierarchical structure;
a layout designation receiving portion for receiving an operation for designating a position and a size of the icon to be displayed in the window for a file and a folder in a lower layer which are included in the folder designated by the folder designation receiving portion;
a layout file generating portion for generating layout information representing the position and the size of the icon which are designated by the layout designation receiving portion and recording the layout information as a layout file; and
a display control portion for displaying the icon in the window based on the layout file recorded by the layout file generating portion,
wherein the display control portion refers to the layout file to preview and display icons to be displayed in relation to a file and a folder in a lower part disposed by two hierarchies on an icon related to a folder in a lower part disposed by a single hierarchy which is included in the folder designated by the folder designation receiving portion when the icon related to the folder in the lower part disposed by the single hierarchy is to be displayed in the window.

2. The folder management device according to claim 1, wherein the layout file generating portion records overlapping order information representing overlapping order of the icon in an including condition in the layout file in addition to the layout information, and
the display control portion decides whether a plurality of icons partially overlaps with each other based on the layout information and displays the icons in an overlap based on the overlapping order information when they overlap with each other.

3. The folder management device according to claim 1 or 2, wherein the layout file generating portion records mode information representing a display mode of the icon in an including condition in the layout file in addition to the layout information, and
the display control portion previews and displays the icons to be displayed in relation to the file and the folder in the lower part disposed by two hierarchies on the icon related to the folder in the lower part disposed by the single hierarchy in which a preview mode is designated based on the mode information for the icon related to the folder in the lower part disposed by the single hierarchy, while a content of the file in the lower part disposed by the single hierarchy is changed into a thumbnail and is thus displayed for the icon related to the file in the lower part disposed by the single hierarchy in which a thumbnail mode is designated based on the mode information.

4. The folder management device according to any of claims 1 to 3, further comprising a text input receiving portion for receiving an input of a text sentence for a text box,
the layout designation receiving portion receiving an operation for designating a position and a size of the text box in addition to the operation for designating a position and a size of an icon,
the layout file generating portion generating layout information representing the position and the size of the text box in addition to the position and the size of the icon, and recording the layout information as the layout file, and
the display control portion displaying the icon and the text sentence in the window based on the layout file recorded by the layout file generating portion.

5. The folder management device according to any of claims 1 to 4, further comprising an operation history recording portion for recording an operation history related to the folder designating operation received by the folder designation receiving portion,
the display control portion displaying a shortcut moving icon for a folder designated subsequently to a designation of the folder in the lower part disposed by the single hierarchy based on the operation history recorded by the operation history recording portion when the icon related to the folder in the lower part disposed by the single hierarchy is to be displayed in the window.

6. A folder management method for changing a file and a folder to be managed in a hierarchical structure into icons and displaying, in a window, icons related to a file and a folder in a lower layer included in a designated folder, comprising:
a first step of receiving an operation for designating any of the folders in the hierarchical structure;
a second step of displaying the icon in the window based on a layout file describing layout information representing a position and a size of the icon to be displayed in the window for a file and a folder in a lower layer which are included in the folder designated at the first step;
a third step of receiving an operation for designating a position and a size of the icon displayed in the window at the second step; and
a fourth step of updating the layout information into a content representing the position and the size of the icon designated by the operation when the operation for designating a position and a size of the icon is received at the third step,
icons to be displayed in relation to a file and a folder in a lower part disposed by two hierarchies being previewed and displayed on an icon related to a folder in a lower part disposed by a single hierarchy which is included in the folder designated at the first step with reference to the layout file when the icon related to the folder in the lower part disposed by the single hierarchy is to be displayed in the window.

7. The folder management method according to claim 6, further comprising a fifth step of recording an operation history related to the folder designating operation every time the folder designating operation is received at the first step,
a shortcut moving icon for a folder designated subsequently to a designation of the folder in the lower part disposed by the single hierarchy being displayed based on the operation history recorded at the fifth step when the icon related to the folder in the lower part disposed by the single hierarchy is to be displayed in the window at the second step.

8. A folder management program for changing a file and a folder to be managed in a hierarchical structure into icons and displaying, in a window, icons related to a file and a folder in a lower layer included in a designated folder, and for causing a computer to function as:
folder designation receiving means for receiving an operation for designating any of the folders in the hierarchical structure;
layout designation receiving means for receiving an operation for designating positions and sizes of the icons to be displayed in the window for a file and a folder in a lower layer which are included in the folder designated by the folder designation receiving means;
layout file generating means for generating layout information representing the position and the size of the icon which are designated by the layout designation receiving means and recording the layout information as a layout file; and
display control means for displaying the icon in the window based on the layout file recorded by the layout file generating means, and referring to the layout file to preview and display icons to be displayed in relation to a file and a folder in a lower part disposed by two hierarchies on an icon related to a folder in a lower part disposed by a single hierarchy which is included in the folder designated by the folder designation receiving means when the icon related to the folder in the lower part disposed by the single hierarchy is to be displayed in the window.

9. A folder management program further comprising operation history recording means for recording an operation history related to the folder designating operation received by the folder designation receiving means,
the computer being caused to function in such a manner that the display control means displays a shortcut moving icon for a folder designated subsequently to a designation of the folder in the lower part disposed by the single hierarchy based on the operation history recorded by the operation history recording means when the icon related to the folder in the lower part disposed by the single hierarchy is to be displayed in the window.
